# EUROPÄISCHE PATENTSCHRIFT

(11) **EP 3 811 386 B1**
(45) Veröffentlichungstag und Bekanntmachung des Hinweises auf die Patenterteilung: **31.07.2024**
(21) Anmeldenummer: 19732642.4
(22) Anmeldetag: 21.06.2019
(51) Int. Cl.: H01C 7/00, H01C 7/02, H01C 7/04, H01C 7/10, H01C 7/18, H01G 4/30, H01G 4/005, H01G 4/012, H01G 4/12, H01C 17/065, H01C 17/28, H01G 4/232, H01C 1/14, H01G 4/008

(54) **KERAMISCHES VIELSCHICHTBAUELEMENT UND VERFAHREN ZUR HERSTELLUNG EINES KERAMISCHEN VIELSCHICHTBAUELEMENTS**
CERAMIC MULTILAYER COMPONENT AND METHOD FOR MANUFACTURING IT
COMPOSANT CÉRAMIQUE MULTICOUCHE ET SA MÉTHODE DE FABRICATION

(30) Priorität: 22.06.2018 DE 102018115085
(43) Veröffentlichungstag der Anmeldung: 28.04.2021
(73) Patentinhaber: TDK Electronics AG, 81671 München (DE)
(72) Erfinder: HOFSTÄTTER, Michael, 8045 Graz (AT); HOFRICHTER, Alfred, 8230 Hartberg (AT); FEICHTINGER, Thomas, 8010 Graz (AT)
(74) Vertreter: Epping - Hermann - Fischer
(86) Internationale Anmeldenummer: PCT/EP2019/066476
(87) Internationale Veröffentlichungsnummer: WO 2019/243578

(56) Entgegenhaltungen:
- DE-A1- 102013 102 686
- JP-A- H10 208 971
- US-A1- 2005 214 517
- US-A1- 2010 079 925
- US-A1- 2010 091 429
- US-A1- 2014 160 619

## Beschreibung

Es werden ein keramisches Vielschichtbauelement und ein Verfahren zur Herstellung eines keramischen Vielschichtbauelements angegeben.

Keramische Vielschichtbauelemente verwenden üblicherweise metallische Innenelektroden, um den elektrischen Strom in das aktive Volumen des Bauteils zu leiten. Die Innenelektroden müssen hierbei so ausgelegt sein, dass im Betrieb keine Stromdichten vorliegen, die zu einer Schädigung der Elektroden führen könnten. Beispielsweise im Fall von Überspanschutzelementen wie beispielsweise einem MLV ("multi-layer varistor", Vielschichtvaristor) kann die Stromdichte 10 GA/m² und mehr erreichen. Um die Stromdichte unter einem kritischen Level halten und um eine ausreichende elektrische Anbindung zu einer Außenelektrode gewährleisten zu können, ist ein bestimmter Mindestquerschnitt der Innenelektroden notwendig. JP H10 208971 A offenbart ein keramisches Vielschichtbauelement wobei zumindest eine Elektrodenschicht eine sich entlang der Haupterstreckungsrichtung verringernde Stromtragfähigkeit aufweist.

Auch für keramische thermische Sensoren auf Basis von NTC-Materialien (NTC: "negative temperature coefficient", Heißleiter) und PTC- Materialien ("positive temperature coefficient, Kaltleiter) in Vielschichtbauweise sind bestimmte Mindestquerschnitte der Innenelektroden notwendig, da der Widerstand der Innenelektroden nur einen vernachlässigbaren Anteil am Gesamtwiderstand haben darf, um das Messsignal solcher Sensoren nicht zu verfälschen.

Zumindest eine Aufgabe von bestimmten Ausführungsformen ist es, ein keramisches Vielschichtbauelement anzugeben. Zumindest eine Aufgabe von weiteren Ausführungsformen ist es, ein Verfahren zur Herstellung eines keramischen Vielschichtbauelements anzugeben.

Diese Aufgaben werden durch einen Gegenstand und ein Verfahren gemäß den unabhängigen Patentansprüchen gelöst. Vorteilhafte Ausführungsformen und Weiterbildungen des Gegenstands und des Verfahrens sind in den abhängigen Ansprüchen gekennzeichnet und gehen weiterhin aus der nachfolgenden Beschreibung und den Zeichnungen hervor.

Gemäß einer Ausführungsform weist ein keramisches Vielschichtbauelement einen Stapel mit keramischen Schichten und dazwischen angeordneten Elektrodenschichten auf.

Gemäß zumindest einer weiteren Ausführungsform wird bei einem Verfahren zur Herstellung eines keramischen Vielschichtbauelements ein Stapel mit keramischen Schichten und dazwischen angeordneten Elektrodenschichten hergestellt.

Die nachfolgend beschriebenen Merkmale und Ausführungsformen beziehen sich gleichermaßen auf das keramische Vielschichtbauelement und auf das Verfahren zur Herstellung eines keramischen Vielschichtbauelements.

Das keramische Vielschichtbauelement kann insbesondere eine Stapelrichtung aufweisen, entlang derer die Schichten des Stapels, also die keramischen Schichten und die Elektrodenschichten, angeordnet sind. Die keramischen Schichten können ein oder mehrere Keramikmaterialien aufweisen oder daraus bestehen, die eine gewünschte Funktionalität aufweisen. Insbesondere kann der Stapel in Stapelrichtung zwischen zwei Elektrodenschichten eine keramische Schicht mit oder aus einem elektrisch leitenden oder halbleitenden Keramikmaterial aufweisen. Beispielsweise können eine oder mehrere keramische Schichten ein Varistormaterial, ein Thermistormaterial, insbesondere ein PTC- oder NTC-Thermistormaterial, und/oder ein dielektrisches Material aufweisen oder daraus sein. Entsprechend kann das keramische Vielschichtbauelement beispielsweise als Überspannungsschutzelement oder als keramischer thermischer Sensor ausgebildet sein. Weiterhin kann der Stapel in Stapelrichtung beispielsweise mit dielektrischen keramischen Schichten abschließen. Die keramischen Schichten und/oder die Elektrodenschichten des Stapels können besonders bevorzugt aus Pasten mit Bindern und/oder anderen organischen und/oder anorganischen Materialien als sogenannte Grünfolien hergestellt, aufeinander gestapelt und anschließend versintert werden.

Weiterhin kann der Stapel Außenflächen aufweisen, die den Stapel in Richtungen senkrecht zur Stapelrichtung begrenzen. In Stapelrichtung kann der Stapel mit einer Unterseite und einer Oberseite abschließen. Beispielsweise kann das Vielschichtbauelement in einer Ansicht entlang der Stapelrichtung einen rechteckigen Querschnitt aufweisen, so dass der Stapel entsprechend vier Außenflächen aufweisen und als Quader ausgebildet sein kann. Auf zumindest einer oder mehreren Außenflächen können Außenelektroden aufgebracht sein, mittels derer im Stapel angeordnete Elektrodenschichten kontaktiert werden können.

Gemäß zumindest einer weiteren Ausführungsform weist der Stapel zumindest eine erste Elektrodenschicht auf, die eine Haupterstreckungsrichtung aufweist. Die zumindest eine erste Elektrodenschicht kann sich entlang der Haupterstreckungsrichtung von einem ersten Endbereich zu einem zweiten Endbereich der ersten Elektrodenschicht erstrecken. Die Haupterstreckungsrichtung kann insbesondere senkrecht zur Stapelrichtung sein. Weiterhin kann die Haupterstreckungsrichtung eine Richtung sein, die senkrecht zu einer Außenfläche steht. Entlang der Haupterstreckungsrichtung weist die zumindest eine erste Elektrodenschicht eine größere Ausdehnung auf als in allen anderen Richtungen, die senkrecht zur Haupterstreckungsrichtung stehen.

Besonders bevorzugt kann die zumindest eine erste Elektrodenschicht mit dem ersten Endbereich an eine erste Außenfläche des Stapels, die insbesondere eine Außenfläche ist, zu der die Haupterstreckungsrichtung senkrecht steht, angrenzen. Weiterhin kann zumindest auf der ersten Außenfläche eine erste Außenelektrode angeordnet sein, die in elektrischem Kontakt mit der zumindest einen ersten Elektrodenschicht steht und die die zumindest eine erste Elektrodenschicht somit elektrisch kontaktiert. Die zumindest eine erste Elektrodenschicht kann insbesondere an die erste Außenelektrode angrenzen und mit dem ersten Endbereich in direktem Kontakt mit der ersten Außenelektrode stehen.

Der erste Endbereich der zumindest einen ersten Elektrodenschicht kann insbesondere eine Zuleitungszone bilden, über die im Betrieb des keramischen Vielschichtbauelements ein elektrischer Strom in die zumindest eine erste Elektrodenschicht oder aus der zumindest einen Elektrodenschicht geleitet werden kann. Dies kann besonders bevorzugt durch eine vorab beschriebene erste Außenelektrode in elektrischem Kontakt mit dem ersten Endbereich erfolgen.

Gemäß der Erfindung weist die zumindest eine erste Elektrodenschicht eine sich entlang der Haupterstreckungsrichtung verringernde Stromtragfähigkeit auf. Das kann insbesondere bedeuten, dass die zumindest eine erste Elektrodenschicht am ersten Endbereich einen höheren maximalen Strom als am zweiten Endbereich aushalten kann. Der maximale Strom bezeichnet diejenige lokale Stromstärke, bei der gerade noch keine lokale Schädigung der Elektrodenschicht stattfindet.

Gemäß der Erfindung weist die zumindest eine erste Elektrodenschicht eine spezifische elektrische Leitfähigkeit auf, die in Haupterstreckungsrichtung abnimmt. Die zumindest eine erste Elektrodenschicht weist durch eine in Haupterstreckungsrichtung abnehmende spezifische elektrische Leitfähigkeit eine geringer werdende Stromtragfähigkeit auf. Insbesondere kann die zumindest eine erste Elektrodenschicht im ersten Endbereich eine höhere spezifische elektrische Leitfähigkeit als im zweiten Endbereich aufweisen. Dies kann beispielsweise dadurch erreicht werden, dass die zumindest eine erste Elektrodenschicht eine Mischung mit oder aus zumindest einem ersten Material mit einer ersten spezifischen elektrischen Leitfähigkeit und einem zweiten Material mit einer zweiten spezifischen elektrischen Leitfähigkeit aufweist, wobei die zweite spezifische elektrische Leitfähigkeit geringer als die erste spezifische elektrische Leitfähigkeit ist, und dass das Verhältnis vom ersten Material zum zweiten Material in Haupterstreckungsrichtung kleiner wird. Mit anderen Worten weist die zumindest eine erste Elektrodenschicht im ersten Endbereich einen höheren Anteil des ersten Materials im Vergleich zum zweiten Material auf als im zweiten Endbereich. Dabei kann die zumindest eine erste Elektrodenschicht im ersten Endbereich frei vom zweiten Material und/oder im zweiten Endbereich frei vom ersten Material sein. Alternativ hierzu können im ersten Endbereich und/oder im zweiten Endbereich das erste und das zweite Material gemeinsam in der zumindest einen ersten Elektrodenschicht enthalten sein.

Die variierende Mischung mit oder aus dem ersten und zweiten Material kann beispielsweise durch einen lokal variierenden Anteil von Sinterpartikeln mit oder aus dem ersten Material und durch einen lokal variierenden Anteil von Sinterpartikeln mit oder aus dem zweiten Material in der zur Herstellung der zumindest einen ersten Elektrodenschicht aufgebrachten Grünfolie hergestellt werden.

Gemäß einer weiteren Ausführungsform nimmt das Verhältnis des ersten Materials zum zweiten Material in zumindest einem Teilbereich der zumindest einen ersten Elektrodenschicht entlang der Haupterstreckungsrichtung ab. Der zumindest eine Teilbereich kann hier und im Folgenden den ersten Endbereich, den zweiten Endbereich, einen Bereich zwischen dem ersten und dem zweiten Endbereich oder eine Kombination aus den genannten Bereichen aufweisen oder dadurch gebildet sein. Die Abnahme des Verhältnisses des ersten zum zweiten Material kann beispielsweise kontinuierlich sein. Mit anderen Worten kann der Anteil des ersten Materials kontinuierlich abnehmen, während der Anteil des zweiten Materials kontinuierlich zunehmen kann. Alternativ oder zusätzlich kann die Abnahme des Verhältnisses in zumindest einem Teilbereich auch stufenweise erfolgen, also in zumindest einer oder mehreren Stufen. Die Stufen im Verhältnis des ersten Materials zum zweiten Material können durch sprunghafte Änderungen des Anteils des ersten und/oder des zweiten Materials hervorgerufen werden.

Gemäß einer weiteren Ausführungsform weist das erste Material ein Metall auf. Beispielsweise kann das erste Material eines oder mehrere Metalle ausgewählt aus Ni, Cu, Ag und Pd aufweisen oder daraus sein. Das zweite Material kann wie das erste Material elektrisch leitend sein. Beispielsweise kann das zweite Material ebenfalls ein Metall aufweisen, beispielsweise eines oder mehrere der vorgenannten Metalle, jedoch in einer solchen Zusammensetzung, dass das zweite Material wie vorab beschrieben eine geringere spezifische elektrische Leitfähigkeit als das erste Material aufweist. Eine geringere spezifische elektrische Leitfähigkeit kann auch bedeuten, dass das zweite Material elektrisch isolierend ist. Beispielsweise kann das zweite Material ein elektrisch isolierendes Keramikmaterial aufweisen oder daraus sein, etwa Siliziumdioxid und/oder Aluminiumoxid.

Gemäß einer weiteren Ausführungsform weist die zumindest eine erste Elektrodenschicht einen Schwerpunkt auf, der näher am ersten Endbereich als am zweiten Endbereich liegt. Das kann bedeuten, dass die zumindest eine erste Elektrodenschicht entlang der Haupterstreckungsrichtung eine geometrische Mitte aufweist, die die zumindest eine erste Elektrodenschicht in zwei, entlang der Haupterstreckungsrichtung gemessene gleich lange Hälften unterteilt. Bezogen auf die geometrische Mitte weist die zumindest eine erste Elektrodenschicht entsprechend mehr Material, insbesondere mehr elektrisch leitendes Material, in der dem ersten Endbereich zugewandten Hälfte als in der dem zweiten Endbereich zugewandten Hälfte auf. Durch mehr Material, insbesondere durch mehr elektrisch leitendes Material, näher am ersten Endbereich kann die Stromtragfähigkeit in diesem Bereich größer sein als in dem Bereich, der näher am zweiten Endbereich ist.

Beispielsweise kann die zumindest eine erste Elektrodenschicht am ersten Endbereich eine größere Dicke als am zweiten Endbereich aufweisen. Die Dicke der zumindest einen ersten Elektrodenschicht kann somit entlang der Haupterstreckungsrichtung abnehmen. Die Dicke einer Schicht des Stapels des keramischen Vielschichtbauelements kann hier und im Folgenden insbesondere in Richtung der Stapelrichtung gemessen werden. Beispielsweise kann die Dicke der zumindest einen ersten Elektrodenschicht in zumindest einem Teilbereich stufenweise abnehmen. Das kann insbesondere bedeuten, dass die Dicke der zumindest einen ersten Elektrodenschicht in zumindest einem Teilbereich in einer oder mehreren Stufen abnimmt, also eine oder mehrere sprunghafte Verringerungen aufweist. Alternativ hierzu kann die Dicke der zumindest einen ersten Elektrodenschicht in zumindest einem Teilbereich auch kontinuierlich abnehmen.

Alternativ oder zusätzlich zu einer in Haupterstreckungsrichtung geringer werdenden Dicke kann die zumindest eine erste Elektrodenschicht am ersten Endbereich eine größere Breite als am zweiten Endbereich aufweisen. Entsprechend kann also die Breite entlang der Haupterstreckungsrichtung abnehmen. Hier und im Folgenden kann die Breite einer Schicht des Stapels des keramischen Vielschichtbauelements in einer Richtung senkrecht zur Stapelrichtung und senkrecht zur Haupterstreckungsrichtung der zumindest einen ersten Elektrodenschicht gemessen werden. Beispielsweise kann die Breite der zumindest einen ersten Elektrodenschicht in zumindest einem Teilbereich stufenweise abnehmen. Das kann insbesondere bedeuten, dass die Breite der zumindest einen ersten Elektrodenschicht in zumindest einem Teilbereich in einer oder mehreren Stufen abnimmt, also eine oder mehrere sprunghafte Verringerungen aufweist. Alternativ hierzu kann die Breite der zumindest einen ersten Elektrodenschicht in zumindest einem Teilbereich auch kontinuierlich abnehmen.

Alternativ oder zusätzlich kann die zumindest eine erste Elektrodenschicht Öffnungen aufweisen, die in Stapelrichtung in die zumindest eine erste Elektrodenschicht hineinreichen. Insbesondere können die Öffnungen durch die zumindest eine erste Elektrodenschicht hindurchreichen und mit dem Material der angrenzenden keramischen Schichten oder auch mit einem davon verschiedenen Keramikmaterial, beispielsweise einem dielektrischen Keramikmaterial, gefüllt sein. Insbesondere können die Öffnungen eine Belegungsdichte aufweisen, die entlang der Haupterstreckungsrichtung zunimmt. Mit anderen Worten weist die zumindest eine erste Elektrodenschicht nahe des zweiten Endbereichs mehr Öffnungen als nahe des ersten Endbereichs auf.

Zur Herstellung der zumindest einen ersten Elektrodenschicht können besonders bevorzugt Verfahren verwendet werden, mittels der die beschriebenen Variationen hinsichtlich der Elektrodenschichtgeometrie und/oder Elektrodenschichtzusammensetzung herstellbar sind, beispielsweise Mehrlagensiebdruck, inhomogener Siebdruck oder Tintenstrahldruck. Beispielsweise kann eine variierende Dicke der zumindest einen ersten Elektrodenschicht mittels Mehrlagensiebdruck herstellbar sein. Hierbei kann durch eine lokal variierende mehrfache Bedruckung entsprechender Flächenbereiche die Dicke angepasst werden. Für den inhomogenen Siebdruck, der als weitere Prozessierungsmöglichkeit ebenfalls zur Herstellung unterschiedlich dicker Bereiche der zumindest einen ersten Elektrodenschicht geeignet sein kann, können gezielt Kavitäten in einem Sieb eingebaut werden beziehungsweise vorgesehen sein. Durch lokal unterschiedliche Dichten und/oder Größen der Kavitäten im Sieb kann der lokale Materialdurchsatz angepasst werden, so dass ebenfalls unterschiedlich dicke Bereiche der zumindest einen ersten Elektrodenschicht herstellbar sein können. Mittels Tintenstrahldruck, insbesondere mittels 3D-Tintenstrahldruck, können sowohl unterschiedlich dicke Bereiche als auch Bereiche mit unterschiedlichen Materialzusammensetzungen hergestellt werden. Unterschiedlich breite Bereiche können durch die beschriebenen Maßnahmen und/oder durch den Einsatz geeigneter Masken beim Aufbringen des Materials der zumindest einen Elektrodenschicht erreicht werden.

Gemäß einer weiteren Ausführungsform weist der Stapel des keramischen Vielschichtbauelements eine Mehrzahl von ersten Elektrodenschichten auf. Die ersten Elektrodenschichten können in Stapelrichtung übereinander und durch keramische Schichten voneinander getrennt angeordnet sein. Jede der ersten Elektrodenschichten, die alle durch die erste Außenelektrode elektrisch kontaktiert sein können, kann eines oder mehrere der vorab beschriebenen Merkmale aufweisen. Bevorzugt können zwei oder mehr oder besonders bevorzugt alle ersten Elektrodenschichten gleich ausgebildet sein, also insbesondere gleiche geometrische Merkmale und/oder gleiche Zusammensetzungsmerkmale aufweisen.

Gemäß einer weiteren Ausführungsform weist der Stapel des keramischen Vielschichtbauelements zumindest eine zweite Elektrodenschicht auf, die sich entlang einer Haupterstreckungsrichtung von einem ersten Endbereich zu einem zweiten Endbereich erstreckt. Auf einer von der ersten Außenfläche verschiedenen zweiten Außenfläche kann eine zweite Außenelektrode angeordnet sein, die die zumindest eine zweite Elektrodenschicht elektrisch kontaktiert, wobei die zumindest eine zweite Elektrodenschicht mit dem ersten Endbereich an die zweite Außenfläche angrenzt. Die Haupterstreckungsrichtung der zumindest einen ersten Elektrodenschicht und die Haupterstreckungsrichtung der zumindest einen zweiten Elektrodenschicht können somit verschieden sein. Besonders bevorzugt sind die beiden Haupterstreckungsrichtungen parallel und entgegengesetzt zu einander gerichtet.

Die zumindest eine zweite Elektrodenschicht kann eines oder mehrere der vorab für die zumindest eine erste Elektrodenschicht beschriebenen Merkmale aufweisen, wobei die erste und zweite Elektrodenschicht besonders bevorzugt in unterschiedlichen Ebenen im Stapel angeordnet sein können. Die zumindest eine zweite Elektrodenschicht und die zumindest eine erste Elektrodenschicht können besonders bevorzugt gleich ausgebildet sein. Weiterhin können mehrere zweite Elektrodenschichten vorhanden sein. Bevorzugt können zwei oder mehr oder besonders bevorzugt alle zweiten Elektrodenschichten gleich ausgebildet sein, also insbesondere gleiche geometrische Merkmale und/oder gleiche Zusammensetzungen aufweisen. Sind mehrere erste und/oder zweite Elektrodenschichten vorhanden, können diese besonders bevorzugt in Stapelrichtung abwechselnd übereinander angeordnet sein.

Im Vergleich zum hier beschriebenen keramischen Vielschichtbauelement mit zumindest einer Elektrodenschicht, die eine mit zu einer Außenfläche größer werdendem Abstand geringer werdende Stromtragfähigkeit aufweist, werden in bekannten Vielschichtbauelementen üblicherweise Innenelektroden mit einer konstanten Dicke und einer rechteckigen Fläche sowie einer homogenen Materialzusammensetzung hergestellt, wobei die minimal mögliche Dicke und Breite der Innenelektroden in Abhängigkeit von der verwendeten Elektrodenmaterialzusammensetzung durch die erforderliche Stromtragfähigkeit unter Berücksichtigung der zu erwartenden Stromdichte an der Zuleitungszone, also am Kontakt mit einer Außenelektrode, vorgegeben sind. Da sich der in eine Innenelektrode eingeprägte Strom entlang der Innenelektrode jedoch kontinuierlich in das angrenzende Keramikmaterial verteilen kann, nimmt die Stromdichte mit zunehmendem Abstand zur Zuleitungszone in der Innenelektrode ab und ist am der Zuleitungszone gegenüber liegenden Ende der Innenelektrode üblicherweise weit unter dem kritischen Level. Bei üblichen Innenelektrodendesigns wird dieser Punkt nicht berücksichtigt und die Innenelektroden, deren Dimensionierung durch die erforderlichen Dimensionen an der Zuleitungszone bestimmt wird, sind auf der der Zuleitungszone gegenüber liegenden Seite überdimensioniert. Im Gegensatz dazu kann es durch die hier beschriebene gezielte Anpassung der Geometrie und/oder der Materialzusammensetzungsverteilung der zumindest einen ersten Elektrodenschicht beim hier beschriebenen keramischen Vielschichtbauelement möglich sein, den Materialverbrauch bei der Herstellung der Elektrodenschicht zu optimieren und so den Materialeinsatz und/oder Kosten zu reduzieren. Neben der Reduzierung des Materialverbrauchs und der damit verbundenen Kostenersparnis kann ein weiterer Vorteil in einer möglichen Verbesserung der Puls-Robustheit und Stromtragfähigkeit bei gleichem Bauteilvolumen liegen. Besonders bevorzugt kann die Stromtragfähigkeit der zumindest einen ersten Elektrodenschicht durch die beschriebenen Maßnahmen so angepasst sein, dass unter Berücksichtigung der Stromverteilung in die angrenzenden keramischen Schichten die Stromdichte in der zumindest einen ersten Elektrodenschicht entlang der Haupterstreckungsrichtung im Wesentlichen konstant ist.

Weitere Vorteile, vorteilhafte Ausführungsformen und Weiterbildungen ergeben sich aus den im Folgenden in Verbindung mit den Figuren beschriebenen Ausführungsbeispielen.

Es zeigen:
Figur 1 eine schematische Darstellung eines keramischen Vielschichtbauelements gemäß einem Ausführungsbeispiel,
Figuren 2A bis 2D schematische Darstellungen von Vielschichtbauelementen gemäß weiteren Ausführungsbeispielen,
Figuren 3A und 3B schematische Darstellungen von Vielschichtbauelementen gemäß weiteren Ausführungsbeispielen,
Figuren 4A und 4B schematische Darstellungen von Vielschichtbauelementen gemäß weiteren Ausführungsbeispielen und
Figuren 5A und 5B schematisch Darstellungen zu Zusammensetzungen einer Elektrodenschicht eine Vielschichtbauelements gemäß weiteren Ausführungsbeispielen.

In den Ausführungsbeispielen und Figuren können gleiche, gleichartige oder gleich wirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben groß dargestellt sein.

Die nachfolgenden Figuren zeigen jeweils Ausführungsbeispiele eines keramischen Vielschichtbauelements 100, das rein beispielhaft als Überspannungsschutzelement, insbesondere als so genanntes Mehrlagen-Überspannungsschutzelement, ausgebildet ist. Alternativ hierzu sind auch Ausführungen des keramischen Vielschichtbauelements, beispielsweise als thermischer Sensor, durch eine entsprechende Wahl des Keramikmaterials möglich.

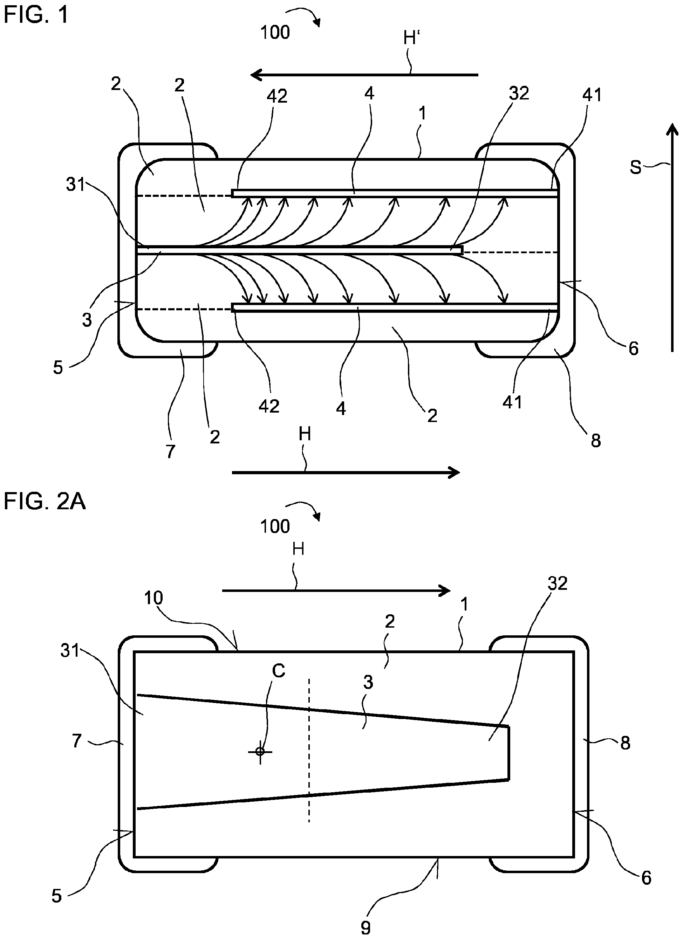

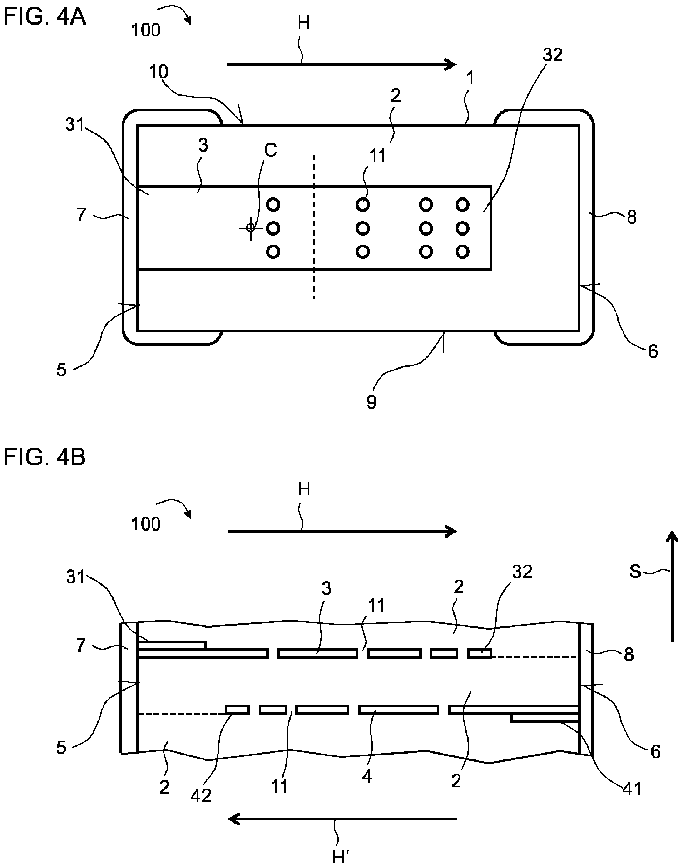

In Figur 1 ist ein Ausführungsbeispiel des keramischen Vielschichtbauelements 100 in einer schematischen Schnittansicht gezeigt, das einen Grundkörper gebildet durch einen Stapel 1 mit keramischen Schichten 2 und Elektrodenschichten 3, 4 aufweist, die entlang einer Stapelrichtung S übereinander angeordnet sind. Der Stapel 1 weist Außenflächen auf, die den Stapel 1 in Richtungen senkrecht zur Stapelrichtung S begrenzen. In Figur 1 sind die sich gegenüberliegenden Außenflächen 5, 6 erkennbar. In den nachfolgenden Figuren 2A bis 2D und 4A sind zusätzlich noch die Außenflächen 9, 10 erkennbar. Beispielsweise kann das Vielschichtbauelement 100 in einer Ansicht entlang der Stapelrichtung S einen rechteckigen Querschnitt aufweisen, so dass der Stapel 1 entsprechend vier Außenflächen aufweisen und als Quader ausgebildet sein kann. In Stapelrichtung schließt der Stapel 1 mit einer Unterseite und einer Oberseite ab.

Das Vielschichtbauelement 100 ist wie vorab beschrieben rein beispielhaft als Überspannungsschutzelement, insbesondere als Mehrlagen-Überspannungsschutzelement, ausgebildet, bei dem zumindest die in Stapelrichtung S zwischen den Elektrodenschichten 3, 4 angeordneten keramischen Schichten 2 ein Varistormaterial aufweisen oder daraus sind. In Stapelrichtung S kann der Stapel 1 mit keramischen Schichten 2 abschließen, die ebenfalls ein Varistormaterial oder alternativ ein dielektrisches Material aufweisen können. Die Elektrodenschichten 3, 4 können bevorzugt eines oder mehrere Metalle, beispielsweise ausgewählt aus Ni, Cu, Ag und Pd, aufweisen oder daraus sein.

Zur Herstellung des keramischen Vielschichtbauelements 100 können die keramischen Schichten 2 und die Elektrodenschichten 3, 4 aus entsprechenden Pasten beispielsweise in Form von Grünfolien hergestellt, übereinander aufgebracht und gemeinsam versintert werden. Hierzu können beispielsweise Druckverfahren wie beispielsweise Siebdruck oder Tintenstrahldruck, gegebenenfalls unter Verwendung von Masken, verwendet werden, mittels derer die Pasten mit den gewünschten Materialien in Form von Sinterpartikeln gemischt mit Bindern, aufgebracht werden können. In Figur 1 sind mittels der gestrichelten Linien Schichtgrenzen zwischen den keramischen Schichten 2 angedeutet, die die jeweils aufgebrachten Schichten andeuten sollen und die durch den Sinterprozess im fertigen Vielschichtbauelement 100 nicht mehr vorhanden sind. Insbesondere im Hinblick auf die Elektrodenschichten 3, 4 können auch Verfahren wie Mehrlagensiebdruck, inhomogener Siebdruck und/oder 3D-Tintenstrahldruck verwendet werden. Beispielsweise können die keramischen Schichten 2 eine Dicke, also eine Ausdehnung entlang der Stapelrichtung S, zwischen 1 µm und 200 µm aufweisen. Die Elektrodenschichten 3, 4 können beispielsweise eine Dicke zwischen 0,1 µm und 10 µm aufweisen.

Auf zumindest einer oder mehreren Außenflächen können Außenelektroden aufgebracht sein, mittels derer im Stapel angeordnete Elektrodenschichten 3, 4 kontaktiert werden können. In den gezeigten Ausführungsbeispielen sind auf den in Figur 1 erkennbaren Außenflächen 5, 6, die im Folgenden auch als erste Außenfläche 5 und als zweite Außenfläche 6 bezeichnet werden, eine erste Außenelektrode 7 und eine zweite Außenelektrode 8 aufgebracht, die ein oder mehrschichtig ausgebildet sein können. Beispielsweise können die Außenelektroden 7, 8 eines oder mehrere Metalle ausgewählt aus Cu, Cr, Ni, Ag und Au aufweisen. Die Außenelektroden 7, 8 können beispielsweise aufgedampft oder aufgesputtert sein. Bevorzugt können die Außenelektroden 7, 8 Schichtenfolgen mit Cr/Cu/Au- oder Cr/Cu/Ag- oder Cr/Ni/Ag- oder Cr/Ni/Ag-Schichten aufweisen. Die Außenelektroden 7, 8 stehen bevorzugt in direktem Kontakt zur Elektrodenschicht 3, die im Folgenden auch als erste Elektrodenschicht 3 bezeichnet werden kann, beziehungsweise den Elektrodenschichten 4, die im Folgenden auch als zweite Elektrodenschichten 4 bezeichnet werden können, so dass die Elektrodenschichten 3, 4 durch die Außenelektroden 7, 8 elektrisch kontaktiert werden.

Rein beispielhaft ist das Vielschichtbauelement 100 in Figur 1 mit einer ersten Elektrodenschicht 3 und mit zwei zweiten Elektrodenschichten 4 gezeigt. Alternativ hierzu können auch mehr als eine erste Elektrodenschicht 3 sowie nur eine oder mehr als zwei zweite Elektrodenschichten 4 vorhanden sein, die bevorzugt durch keramische Schichten 2 in Stapelrichtung S voneinander getrennt abwechselnd übereinander aufgebracht sein können. Somit kann das keramische Vielschichtbauelement 100 zumindest eine erste Elektrodenschicht 3 und zumindest eine zweite Elektrodenschicht 4 aufweisen.

Die zumindest eine erste Elektrodenschicht 3 erstreckt sich von einem ersten Endbereich 31, der an die erste Außenfläche 5 und an die erste Außenelektrode 7 angrenzt, entlang einer Haupterstreckungsrichtung H zu einem zweiten Endbereich 32, während sich die zweiten Elektrodenschichten 4 entsprechend von einem ersten Endbereich 41, der an die zweite Außenfläche 6 und an die zweite Außenelektrode 8 angrenzt, entlang einer der Haupterstreckungsrichtung H parallel und entgegengesetzt gerichteten Haupterstreckungsrichtung H' zu einem zweiten Endbereich 42 erstrecken. Die ersten Endbereiche 31, 41 können insbesondere Zuleitungszonen bilden, über die im Betrieb des keramischen Vielschichtbauelements 100 je nach Stromrichtung ein elektrischer Strom in Elektrodenschichten hinein oder aus Elektrodenschichten heraus geleitet werden kann. Ein entsprechender rein beispielhafter Stromfluss ist in Figur 1 mittels der Pfeile zwischen der ersten Elektrodenschicht 3 und den zweiten Elektrodenschichten 4 angedeutet. Da sich der in die erste Elektrodenschicht 3 eingeprägte Strom entlang der Haupterstreckungsrichtung H kontinuierlich in die Keramik verteilen kann, nimmt die Stromstrke mit zunehmendem Abstand zur durch den ersten Endbereich 31 gebildeten Zuleitungszone in der ersten Elektrodenschicht 3 ab. Die zumindest eine erste Elektrodenschicht 3 ist daher so ausgebildet, dass sie eine sich entlang der Haupterstreckungsrichtung H verringernde Stromtragfähigkeit aufweist. Entsprechend kann die zumindest eine erste Elektrodenschicht 3 am ersten Endbereich 31 einen höheren maximalen Strom als am zweiten Endbereich 32 aushalten. In den nachfolgenden Figuren sind Ausführungsbeispiele für entsprechende Ausführungen der zumindest einen ersten Elektrodenschicht 3 gezeigt. Die zweiten Elektrodenschichten 4 können bevorzugt gleich wie die erste Elektrodenschicht 3 ausgebildet sein. Ebenso können bei einer Mehrzahl von ersten Elektrodenschichten diese bevorzugt gleich ausgebildet sein.

Die Figuren 2A bis 2D zeigen Schnittdarstellungen durch ein Vielschichtbauelement 100 wie dem der Figur 1 entlang einer Schnittebene, die senkrecht zur Stapelrichtung durch die zumindest eine erste Elektrodenschicht 3 verläuft. In den gezeigten Ausführungsbeispielen weist die zumindest eine erste Elektrodenschicht 3 einen Schwerpunkt C auf, der näher am ersten Endbereich 31 als am zweiten Endbereich 32 liegt, wobei die Lage des Schwerpunkts C in den Figuren nur schematisch angedeutet ist. Die zumindest eine erste Elektrodenschicht 3 weist weiterhin, wie durch die gestrichelte Linie angedeutet ist, entlang der Haupterstreckungsrichtung H eine geometrische Mitte auf, die die zumindest eine erste Elektrodenschicht 3 entlang der Haupterstreckungsrichtung H in zwei gleich lange Hälften unterteilt. Von der geometrischen Mitte aus gesehen liegt der Schwerpunkt C somit in der an den ersten Endbereich 31 angrenzenden Hälfte. Entsprechend weist die zumindest eine erste Elektrodenschicht 3 mehr Material, insbesondere mehr elektrisch leitendes Material, auf der dem ersten Endbereich 31 zugewandten Hälfte als auf der dem zweiten Endbereich 32 zugewandten Hälfte auf. Dadurch kann erreicht werden, dass die Stromtragfähigkeit im ersten Endbereich 31 größer als im zweiten Endbereich 32 ist.

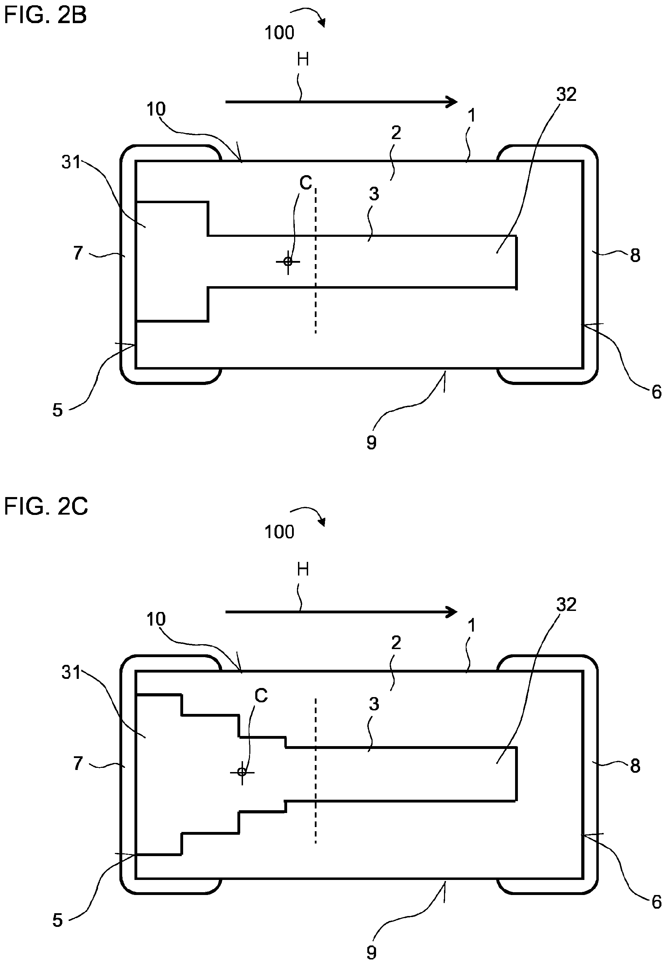

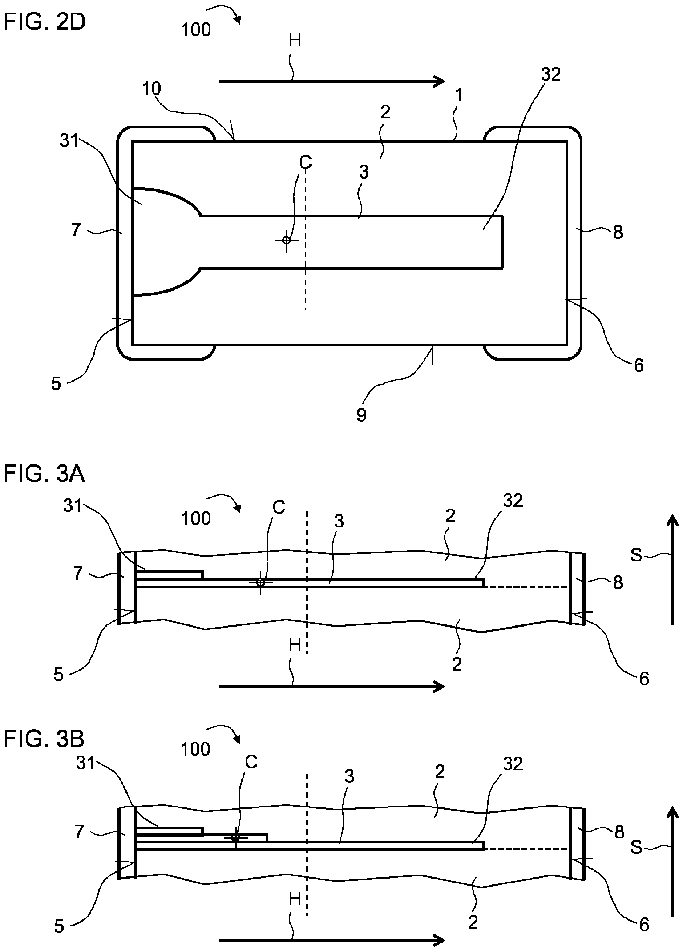

In den Ausführungsbeispielen der Figuren 2A bis 2D wird die beschriebene Lage des Schwerpunkts C dadurch bewirkt, dass die zumindest eine erste Elektrodenschicht 3 am ersten Endbereich 31 eine größere Breite als am zweiten Endbereich 32 aufweist. Das bedeutet, dass die Breite, die in einer Richtung senkrecht zur Stapelrichtung S und senkrecht zur Haupterstreckungsrichtung H der zumindest einen ersten Elektrodenschicht 3 gemessen wird, entlang der Haupterstreckungsrichtung H abnimmt. Beispielsweise kann die Breite in zumindest einem Teilbereich kontinuierlich abnehmen. In Figur 2A ist eine erste Elektrodenschicht 3 gezeigt, deren Breite linear kontinuierlich über die gesamte Länge in Haupterstreckungsrichtung H kleiner wird. Die erste Elektrodenschicht 3 kann hierfür wie gezeigt trapezförmig ausgebildet sein. Weiterhin kann die Breite der zumindest einen ersten Elektrodenschicht 3 in zumindest einem Teilbereich stufenweise abnehmen. Im in Figur 2B gezeigten Ausführungsbeispiel verringert sich die Breite der ersten Elektrodenschicht 3 beispielsweise in einer Stufe, im in Figur 2C gezeigten Ausführungsbeispiel in mehreren Stufen. Wie in Figur 2D gezeigt ist, beschränkt sich die Breitenverringerung nicht nur auf polygonal geformte Elektrodenschichten, sondern kann auch Flächen mit nichtgeraden Kanten beinhalten. Zur Herstellung der gezeigten Elektrodenschichtformen können beispielsweise maskenbasierte Druckverfahren oder Tintenstrahldruckverfahren verwendet werden.

In den Ausführungsbeispielen der Figuren 3A und 3B weist die zumindest eine erste Elektrodenschicht 3 am ersten Endbereich 31 eine größere Dicke als am zweiten Endbereich 32 auf. Wie in den vorherigen Ausführungsbeispielen kann dadurch erreicht werden, dass der Schwerpunkt C näher am ersten Endbereich 31 als am zweiten Endbereich 32 liegt. Beispielsweise kann die Dicke der zumindest einen ersten Elektrodenschicht 3, wie in den Figuren 3A und 3B gezeigt ist, in zumindest einem Teilbereich stufenweise abnehmen. Beispielsweise kann die Dicke der ersten Elektrodenschicht 3 in einer Stufe abnehmen, wie in Figur 3A gezeigt ist, oder in mehreren Stufen, wie in Figur 3B gezeigt ist. Zur Herstellung einer stufenweise abnehmenden Dicke kann beispielsweise ein Mehrlagensiebdruckverfahren verwendet werden. Hierbei kann durch mehrfache Bedruckung entsprechender Flächenbereiche eine variierende Dicke herstellbar sein. Weiterhin kann auch ein inhomogenes Siebdruckverfahren verwendet werden, bei dem durch eine Dichte und/oder Größe von Kavitäten eines Siebs der Materialdurchsatz angepasst werden kann. Weiterhin kann auch ein 3D-Tintenstrahldruckverfahren verwendet werden. Insbesondere mittels letzterem kann auch eine sich kontinuierlich verringernde Dicke herstellbar sein. Die in den Figuren 3A und 3B gezeigten Elektrodenschichten können in einer Aufsicht entlang der Stapelrichtung S beispielsweise einen rechteckigen Querschnitt oder einen in Verbindung mit den vorherigen Figuren beschriebenen Querschnitt mit einer sich verringernden Breite aufweisen.

In den Figuren 4A und 4B sind Ausführungsbeispiele des keramischen Vielschichtbauelements 100 mit der zumindest einen ersten Elektrodenschicht 3 gezeigt, die Öffnungen 11 aufweist, die in Stapelrichtung S in die zumindest eine erste Elektrodenschicht 3 hineinreichen und besonders bevorzugt durch die zumindest eine erste Elektrodenschicht 3 hindurchreichen. Die Öffnungen 11 können mit dem Material der angrenzenden keramischen Schichten 2 oder auch mit einem davon verschiedenen Keramikmaterial, beispielsweise einem dielektrischen Keramikmaterial, gefüllt sein. Wie in Figur 4A gezeigt ist, weisen die Öffnungen 11 eine Belegungsdichte auf, die entlang der Haupterstreckungsrichtung H zunimmt, so dass die zumindest eine erste Elektrodenschicht 3 nahe des zweiten Endbereichs 32 mehr Öffnungen als nahe des ersten Endbereichs 31 aufweist, wodurch wiederum eine Verschiebung des Schwerpunkts C in Richtung des ersten Endbereichs 31 erreicht wird. Die in Figur 4A gezeigte Anzahl und Anordnung der Öffnungen 11 ist rein beispielhaft zu verstehen. Es kann auch möglich sein, dass der Öffnungsdurchmesser mit zunehmendem Abstand vom ersten Endbereich 31 größer wird.

Wie in Figur 4B gezeigt ist, können die Öffnungen 11 auch mit einer variierenden Dicke wie in Verbindung mit den Ausführungsbeispielen der Figuren 3A und 3B beschrieben kombiniert werden. Darüber hinaus ist auch eine alternative oder zusätzliche Kombination mit einer variierenden Breite wie in Verbindung mit den Ausführungsbeispielen der Figuren 2A bis 2D beschrieben möglich. Wie vorab erwähnt und in Figur 4B gezeigt ist, können insbesondere erste und zweite Elektrodenschichten 3, 4 gleich ausgebildet sein.

Wie in den vorergehenden Ausführungsbeispielen beschrieben ist, können die Elektrodenschichten des Vielschichtbauelements eine sich in Haupterstreckungsrichtung verjüngende Form in Bezug auf die Breite und/oder die Dicke sowie alternativ oder zusätzlich Öffnungen mit einer in Haupterstreckungsrichtung größer werdenden Belegungsdichte oder einem größer werdenden Öffnungsdurchmesser zur Reduzierung des Elektrodenschichtmaterials aufweisen, wodurch ein effizienter Materialverbrauch erreicht werden kann. Die geometrische Ausbildung der Elektrodenschichten kann insbesondere derart erfolgen, dass die lokale Stromdichte innerhalb der Elektrodenschichten abhängig von den zu erwartenden normalen Betriebsbedingungen trotz in Haupterstreckungsrichtung kleiner werdender Stromtragfähigkeit bevorzugt konstant und stets unterhalb einem kritischen Level bleibt.

Zusätzlich zu den beschriebenen geometrischen Variationen weist die zumindest eine erste Elektrodenschicht eine spezifische elektrische Leitfähigkeit auf, die in Haupterstreckungsrichtung abnimmt, wodurch ebenfalls eine in Haupterstreckungsrichtung geringer werdende Stromtragfähigkeit erzielt wird. Insbesondere kann die zumindest eine erste Elektrodenschicht im ersten Endbereich eine höhere spezifische elektrische Leitfähigkeit als im zweiten Endbereich aufweisen. Dies kann dadurch erreicht werden, dass die zumindest eine erste Elektrodenschicht eine Mischung mit oder aus zumindest einem ersten Material mit einer ersten spezifischen elektrischen Leitfähigkeit und einem zweiten Material mit einer zweiten spezifischen elektrischen Leitfähigkeit aufweist, wobei die zweite spezifische elektrische Leitfähigkeit geringer als die erste spezifische elektrische Leitfähigkeit ist, und dass das Verhältnis vom ersten Material zum zweiten Material in Haupterstreckungsrichtung kleiner wird. Entsprechend weist die zumindest eine erste Elektrodenschicht im ersten Endbereich einen höheren Anteil des ersten Materials im Vergleich zum zweiten Material auf als im zweiten Endbereich. Dabei kann die zumindest eine erste Elektrodenschicht im ersten Endbereich frei vom zweiten Material und/oder im zweiten Endbereich frei vom ersten Material sein. Alternativ hierzu können im ersten Endbereich und/oder im zweiten Endbereich das erste und das zweite Material gemeinsam in der zumindest einen ersten Elektrodenschicht enthalten sein. Die variierende Mischung mit oder aus dem ersten und zweiten Material kann beispielsweise durch einen lokal variierenden Anteil von Sinterpartikeln mit oder aus dem ersten Material und durch einen lokal variierenden Anteil von Sinterpartikeln mit oder aus dem zweiten Material in der zur Herstellung der zumindest einen ersten Elektrodenschicht aufgebrachten Grünfolie erreicht werden. Zur Herstellung eines variierenden Verhältnisses des ersten und zweiten Materials kann bevorzugt ein 3D-Tintenstrahldruck-Verfahren verwendet werden.

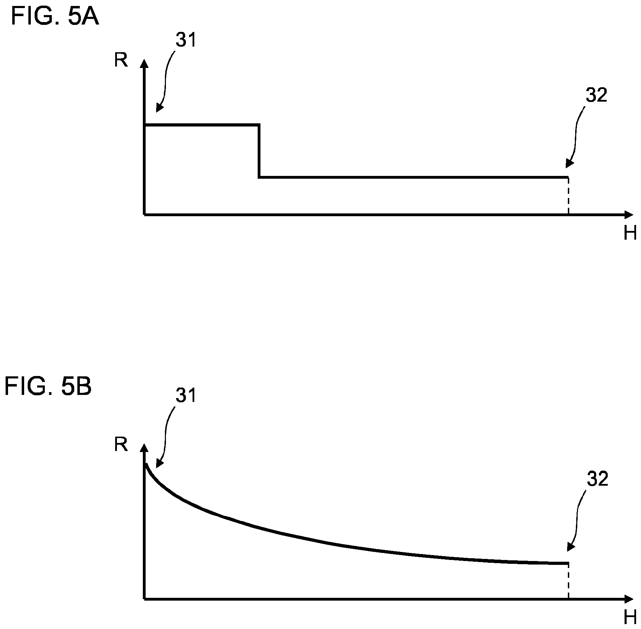

Wie in den Figuren 5A und 5B gezeigt ist, nimmt das Verhältnis R des ersten Materials zum zweiten Material in zumindest einem Teilbereich der zumindest einen ersten Elektrodenschicht entlang der Haupterstreckungsrichtung H entsprechend ab. Die Abnahme des Verhältnisses R des ersten zum zweiten Material kann, wie in Figur 5A angedeutet ist, stufenweise sein, also wie gezeigt in einer Stufe oder alternativ auch in mehreren Stufen. Weiterhin kann die Abnahme des Verhältnisses R beispielsweise auch kontinuierlich sein, wie in Figur 5B angedeutet ist.

Das erste Material kann besonders bevorzugt ein Metall sein, insbesondere eines oder mehrere Metalle ausgewählt aus Ni, Cu, Ag und Pd. Das zweite Material kann wie das erste Material elektrisch leitend sein und beispielsweise ebenfalls ein Metall aufweisen, beispielsweise eines oder mehrere der vorgenannten Metalle, jedoch in einer solchen Zusammensetzung, dass das zweite Material eine geringere spezifische elektrische Leitfähigkeit als das erste Material aufweist. Weiterhin kann das zweite Material auch elektrisch isolierend sein und beispielsweise ein elektrisch isolierendes Keramikmaterial wie etwa Siliziumdioxid und/oder Aluminiumoxid aufweisen oder daraus sein.

### Bezugszeichenliste

- 1: Stapel
- 2: keramische Schicht
- 3: erste Elektrodenschicht
- 4: zweite Elektrodenschicht
- 5: erste Außenfläche
- 6: zweite Außenfläche
- 7: erste Außenelektrode
- 8: zweite Außenelektrode
- 9, 10: Außenfläche
- 11: Öffnung
- 31, 41: erster Endbereich
- 32, 42: zweiter Endbereich
- 100: keramisches Vielschichtbauelement
- C: Schwerpunkt
- H, H`: Haupterstreckungsrichtung
- R: Verhältnis
- S: Stapelrichtung

## Patentansprüche

1. Keramisches Vielschichtbauelement (100), aufweisend einen Stapel (1) mit keramischen Schichten (2) und dazwischen angeordneten Elektrodenschichten (3, 4),
wobei die keramischen Schichten und die Elektrodenschichten entlang einer Stapelrichtung (S) übereinander angeordnet sind,
wobei sich zumindest eine erste Elektrodenschicht (3) entlang einer Haupterstreckungsrichtung (H) von einem ersten Endbereich (31) zu einem zweiten Endbereich (32) der ersten Elektrodenschicht erstreckt,
wobei die zumindest eine Elektrodenschicht eine sich entlang der Haupterstreckungsrichtung verringernde Stromtragfähigkeit aufweist, **gekennzeichnet dadurch, dass** die zumindest eine Elektrodenschicht eine spezifische elektrische Leitfähigkeit aufweist, die in Haupterstreckungsrichtung abnimmt.

2. Vielschichtbauelement nach Anspruch 1, wobei die zumindest eine Elektrodenschicht eine Mischung aus zumindest einem ersten Material mit einer ersten spezifischen elektrischen Leitfähigkeit und einem zweiten Material mit einer zweiten spezifischen elektrischen Leitfähigkeit, die geringer als die erste elektrische Leitfähigkeit ist, aufweist und das Verhältnis (R) vom ersten Material zum zweiten Material in Haupterstreckungsrichtung abnimmt.

3. Vielschichtbauelement nach dem vorherigen Anspruch, wobei das Verhältnis in zumindest einem Teilbereich kontinuierlich abnimmt.

4. Vielschichtbauelement nach einem der beiden vorherigen Ansprüche, wobei das Verhältnis in zumindest einem Teilbereich stufenweise abnimmt.

5. Vielschichtbauelement nach einem der Ansprüche 2 bis 4, wobei das erste Material ein Metall aufweist.

6. Vielschichtbauelement nach einem der Ansprüche 2 bis 5, wobei das zweite Material elektrisch leitend ist und ein Metall aufweist.

7. Vielschichtbauelement nach einem der Ansprüche 2 bis 6, wobei das erste und/oder zweite Material ausgewählt ist aus Ni, Cu, Ag, Pd.

8. Vielschichtbauelement nach einem der Ansprüche 2 bis 5, wobei das zweite Material elektrisch isolierend ist und ein Keramikmaterial aufweist.

9. Vielschichtbauelement nach einem der vorherigen Ansprüche, wobei die zumindest eine erste Elektrodenschicht einen Schwerpunkt (C) aufweist, der näher am ersten Endbereich als am zweiten Endbereich liegt.

10. Vielschichtbauelement nach Anspruch 9, wobei die zumindest eine erste Elektrodenschicht am ersten Endbereich eine größere Dicke und/oder eine größere Breite als am zweiten Endbereich aufweist und wobei die Dicke und/oder die Breite der zumindest einen ersten Elektrodenschicht in zumindest einem Teilbereich stufenweise abnimmt.

11. Vielschichtbauelement nach einem der beiden vorherigen Ansprüche, wobei die zumindest eine erste Elektrodenschicht am ersten Endbereich eine größere Dicke und/oder eine größere Breite als am zweiten Endbereich aufweist und wobei die Dicke und/oder die Breite der zumindest einen ersten Elektrodenschicht in zumindest einem Teilbereich kontinuierlich abnimmt.

12. Vielschichtbauelement nach einem der vorherigen Ansprüche, wobei die zumindest eine erste Elektrodenschicht Öffnungen (11) aufweist, die in Stapelrichtung in die Elektrodenschicht hineinreichen, und wobei die Öffnungen eine Belegungsdichte aufweisen, die entlang der Haupterstreckungsrichtung zunimmt.

13. Vielschichtbauelement nach einem der vorherigen Ansprüche, wobei der Stapel Außenflächen (5, 6, 9, 10) aufweist, die den Stapel in Richtungen senkrecht zur Stapelrichtung begrenzen,
wobei die zumindest eine erste Elektrodenschicht mit dem ersten Endbereich an eine erste Außenfläche (5) angrenzt und
wobei auf der ersten Außenfläche eine erste Außenelektrode (7) angeordnet ist, die die zumindest eine erste Elektrodenschicht elektrisch kontaktiert.

14. Vielschichtbauelement nach einem der vorherigen Ansprüche, wobei sich zumindest eine zweite Elektrodenschicht (4) entlang einer Haupterstreckungsrichtung (H') von einem ersten Endbereich (41) zu einem zweiten Endbereich (42) der zweiten Elektrodenschicht erstreckt,
wobei auf einer von der ersten Außenfläche verschiedenen zweiten Außenfläche (6) eine zweite Außenelektrode (8) angeordnet ist, die die zumindest eine zweite Elektrodenschicht elektrisch kontaktiert,
wobei die zumindest eine zweite Elektrodenschicht mit dem ersten Endbereich an die zweite Außenfläche angrenzt und
wobei die zumindest eine zweite Elektrodenschicht und die zumindest eine erste Elektrodenschicht gleich ausgebildet sind.

15. Verfahren zur Herstellung eines keramischen Vielschichtbauelements gemäß einem der vorherigen Ansprüche, bei dem die zumindest eine erste Elektrodenschicht mittels Mehrlagensiebdruck, mittels inhomogenem Siebdruck oder mittels Tintenstrahldruck hergestellt wird.

## Claims

1. Ceramic multilayer component (100), comprising a stack (1) with ceramic layers (2) and electrode layers (3, 4) arranged between them,
wherein the ceramic layers and the electrode layers are arranged along a stack direction (S) above one another,
wherein at least one first electrode layer (3) extends along a primary main extension direction (H) from a first end region (31) to a second end region (32) of the first electrode layer,
wherein the at least one electrode layer has a current-carrying capacity that decreases along the primary main extension direction,
**characterized in that** the at least one electrode layer has a specific electrical conductivity that decreases along the primary main extension direction.

2. Multilayer component according to Claim 1, wherein the at least one electrode layer comprises a mixture of at least one first material with a first specific electrical conductivity and a second material with a second specific electrical conductivity that is lower than the first electrical conductivity, and the ratio (R) of the first material to the second material decreases along the primary main extension direction.

3. Multilayer component according to the preceding claim, wherein the ratio decreases continuously in at least one partial region.

4. Multilayer component according to either of the two preceding claims, wherein the ratio decreases in a stepwise manner in at least one partial region.

5. Multilayer component according to any of Claims 2 to 4, wherein the first material comprises a metal.

6. Multilayer component according to any of Claims 2 to 5, wherein the second material is electrically conductive and comprises a metal.

7. Multilayer component according to any of Claims 2 to 6, wherein the first and/or second material are/is selected from Ni, Cu, Ag, Pd.

8. Multilayer component according to any of Claims 2 to 5, wherein the second material is electrically insulating and comprises a ceramic material.

9. Multilayer component according to any of the preceding claims, wherein the at least one first electrode layer has a center of gravity (C) that is located closer to the first end region than to the second end region.

10. Multilayer component according to Claim 9, wherein the at least one first electrode layer has a greater thickness and/or a greater width at the first end region than at the second end region and wherein the thickness and/or the width of the at least one first electrode layer decrease(s) in a stepwise manner in at least one partial region.

11. Multilayer component according to either of the two preceding claims, wherein the at least one first electrode layer has a greater thickness and/or a greater width at the first end region than at the second end region and wherein the thickness and/or the width of the at least one first electrode layer decrease(s) in a continuous manner in at least one partial region.

12. Multilayer component according to any of the preceding claims, wherein the at least one first electrode layer comprises openings (11) that extend into the electrode layer in the stack direction, and wherein the openings exhibit an occupancy density that increases along the primary main extension direction.

13. Multilayer component according to any of the preceding claims, wherein the stack has outer surfaces (5, 6, 9, 10) that bound the stack in directions perpendicular to the stack direction,
wherein the at least one first electrode layer adjoins a first outer surface (5) by way of the first end region and
wherein a first outer electrode (7) that electrically contacts the at least one first electrode layer is arranged on the first outer surface.

14. Multilayer component according to any of the preceding claims, wherein at least one second electrode layer (4) extends along a primary main extension direction (H') from a first end region (41) to a second end region (42) of the second electrode layer,
wherein a second outer electrode (8) that electrically contacts the at least one second electrode layer is arranged on a second outer surface (6) that is different from the first outer surface,
wherein the at least one second electrode layer adjoins the second outer surface by way of the first end region and
wherein the at least one second electrode layer and the at least one first electrode layer are of the same design.

15. Method for manufacturing a ceramic multilayer component according to any of the preceding claims, wherein the at least one first electrode layer is produced by means of multi-layer screen printing, by means of inhomogeneous screen printing, or by means of inkjet printing.

## Revendications

1. Composant céramique multicouche (100), présentant un empilement (1) de couches céramiques (2) et de couches d'électrodes (3, 4) disposées entre celles-ci,
dans lequel les couches céramiques et les couches d'électrodes sont disposées les unes au-dessus des autres le long d'une direction d'empilement (S),
dans lequel au moins une première couche d'électrode (3) s'étend le long d'une direction d'étendue principale (H) d'une première zone d'extrémité (31) à une deuxième zone d'extrémité (32) de la première couche d'électrodes,
dans lequel ladite au moins une couche d'électrodes présente une capacité de charge électrique diminuant le long de la direction d'étendue principale,
**caractérisé en ce que** ladite au moins une couche d'électrodes présente une conductivité électrique spécifique qui diminue dans la direction d'étendue principale.

2. Composant multicouche selon la revendication 1, dans lequel ladite au moins une couche d'électrodes présente un mélange d'au moins un premier matériau ayant une première conductivité électrique spécifique et d'un deuxième matériau ayant une deuxième conductivité électrique spécifique qui est inférieure à la première conductivité électrique, et le rapport (R) entre le premier matériau et le deuxième matériau diminue dans la direction d'étendue principale.

3. Composant multicouche selon la revendication précédente, dans lequel le rapport diminue en continu dans au moins une zone partielle.

4. Composant multicouche selon l'une des deux revendications précédentes, dans lequel le rapport diminue progressivement dans au moins une zone partielle.

5. Composant multicouche selon l'une quelconque des revendications 2 à 4, dans lequel le premier matériau présente un métal.

6. Composant multicouche selon l'une quelconque des revendications 2 à 5, dans lequel le deuxième matériau est électriquement conducteur et présente un métal.

7. Composant multicouche selon l'une quelconque des revendications 2 à 6, dans lequel le premier et/ou le deuxième matériau sont sélectionnés parmi Ni, Cu, Ag, Pd.

8. Composant multicouche selon l'une quelconque des revendications 2 à 5, dans lequel le deuxième matériau est électriquement isolant et présente un matériau céramique.

9. Composant multicouche selon l'une quelconque des revendications précédentes, dans lequel ladite au moins une première couche d'électrodes présente un centre de gravité (C) qui est plus proche de la première zone d'extrémité que de la deuxième zone d'extrémité.

10. Composant multicouche selon la revendication 9, dans lequel ladite au moins une première couche d'électrodes présente au niveau de la première zone d'extrémité une plus grande épaisseur et/ou une plus grande largeur qu'au niveau de la deuxième zone d'extrémité, et dans lequel l'épaisseur et/ou la largeur de ladite au moins une première couche d'électrodes diminue(nt) progressivement dans au moins une zone partielle.

11. Composant multicouche selon l'une des deux revendications précédentes, dans lequel ladite au moins une première couche d'électrodes présente au niveau de la première zone d'extrémité une plus grande épaisseur et/ou une plus grande largeur qu'au niveau de la deuxième zone d'extrémité, et dans lequel l'épaisseur et/ou la largeur de ladite au moins une première couche d'électrodes diminue(nt) continu dans au moins une zone partielle.

12. Composant multicouche selon l'une quelconque des revendications précédentes, dans lequel ladite au moins une première couche d'électrodes présente des ouvertures (11) qui pénètrent dans la couche d'électrodes dans la direction d'empilement, et dans lequel les ouvertures présentent une densité d'occupation qui augmente le long de la direction d'étendue principale.

13. Composant multicouche selon l'une quelconque des revendications précédentes, dans lequel l'empilement présente des surfaces extérieures (5, 6, 9, 10) qui délimitent l'empilement dans des directions perpendiculaires à la direction d'empilement,
dans lequel ladite au moins une première couche d'électrodes est adjacente par la première zone d'extrémité à une première surface extérieure (5), et
dans lequel, sur la première surface extérieure, une première électrode extérieure (7) est disposée qui met en contact électrique ladite au moins une première couche d'électrodes.

14. Composant multicouche selon l'une quelconque des revendications précédentes, dans lequel au moins une deuxième couche d'électrodes (4) s'étend le long d'une direction d'étendue principale (H') d'une première zone d'extrémité (41) à une deuxième zone d'extrémité (42) de la deuxième couche d'électrodes,
dans lequel, sur une deuxième surface extérieure (6), différente de la première surface extérieure, une deuxième électrode extérieure (8) est disposée qui met en contact électrique ladite au moins une deuxième couche d'électrodes,
dans lequel ladite au moins une deuxième couche d'électrodes est adjacente par la première zone d'extrémité à la deuxième surface extérieure, et
dans lequel ladite au moins une deuxième couche d'électrodes et ladite au moins une première couche d'électrodes sont réalisées de manière identique.

15. Procédé de fabrication d'un composant céramique multicouche selon l'une quelconque des revendications précédentes, dans lequel ladite au moins une première couche d'électrodes est fabriquée au moyen d'une sérigraphie multicouche, au moyen d'une sérigraphie inhomogène ou au moyen d'une impression à jet d'encre.
